# EUROPEAN PATENT SPECIFICATION

(11) **EP 3 541 195 B1**
(45) Date of publication and mention of the grant of the patent: **03.05.2023**
(21) Application number: 17811205.8
(22) Date of filing: 15.11.2017
(51) Int. Cl.: A23D 7/00, A23D 7/005, A23D 7/02, A23D 7/05

(54) **DIETARY MARGARINE COMPOSITION FOR PUFF PASTRY WITH REDUCED SATURATED FAT CONTENT**
DIÄTETISCHE MARGARINEZUSAMMENSETZUNG FÜR BLÄTTERTEIG MIT REDUZIERTEM GEHALT AN GESÄTTIGTEM FETT
COMPOSITION DE MARGARINE ALIMENTAIRE DESTINÉE À UNE PÂTE FEUILLETÉE À TENEUR RÉDUITE EN GRAISSE SATURÉE

(30) Priority: 18.11.2016 IT 201600117079
(43) Date of publication of application: 25.09.2019
(73) Proprietor: Barilla G. e R. Fratelli S.p.A., 43100 Parma (IT)
(72) Inventor: MORBARIGAZZI, Nadia, 43124 Parma (IT); BACCHI, Annalisa, 26100 Cremona (IT)
(74) Representative: Ferreccio, Rinaldo
(86) International application number: PCT/EP2017/079305
(87) International publication number: WO 2018/091521

(56) References cited:
- EP-A1- 1 611 794
- US-A1- 2006 251 789

## Description

### Field of application

The present invention relates, in general, to the field of the food industry. In particular, the invention relates to a margarine composition with a reduced saturated fat content, for the production of bakery products such as puff pastry obtained from rolling.

### Prior art

It is known that margarine is an emulsion consisting of vegetable fats and oils with water, which may have as a dispersed phase both a fatty phase and a water phase depending on the intended use, and that it is widely used in the food sector for the production of different types of bakery products when a fatty component in solid form is required.

It is also known that, among the more specific uses of margarine, puff pastry and sweet leavened puff pastry of the Danish pastry type require the use of a particular type of margarine, known as "roil-in margarine", the structure of which is characterized by plasticity and a suitable consistency together with uniformity and compactness.

Plasticity and consistency are necessary in that layers of margarine must be formed between the layers of pastry and it is crucial that they remain intact during the dough kneading and rolling operations, in order to ensure the maximum flakiness of the end product.

Uniformity and compactness are equally important for preventing the oily part of the margarine from being partially absorbed by the pastry.

It is known that the presence of high percentages of saturated fatty acids in the formulation of the product influences the plasticity thereof. Roll-in margarines generally have in fact a saturated fatty acids content of at least 50%.

It is also known that the fatty phase of the margarine may comprise palm oil, which is rich in palmitic acid, mixed with other vegetable oils.

It is also known that palm oil is a vegetable fat extracted from the seeds of the oil palm ((*Elaeis guineensis* and *Elaeis Oleifera*) and is one of the main vegetable oils used by the food industry since it has a high technological versatility and unique properties which influence the structure, appearance, the taste and the shelf life of many products.

In fact, this oil is used because it is solid at room temperature, has a neutral taste and has a high content of saturated fatty acids which help prevent rancidity.

Owing to its versatility and its low price on the market compared to the other vegetable oils, palm oil is used in the doughs of a wide range of products, including sweet and savory bakery products and pastry products.

It is known that an increase in the risk of cardiovascular disease is associated with the high consumption of saturated fatty acids and it is also known that saturated fatty acids are present both in vegetable oils, including palm oil, and in animal fats such as butter.

More recent studies (M.Crupkin and Zambelli A. "Detrimental impact of Trans Fats on Human Health: Stearic Acid-Rich Fats as possible substitutes", Comprehensive Reviews in Food Science and Food Safety, 7(3):271-279; Hunter JE, Zhang J, Kris-Etherton PM., "Cardiovascular disease risk of dietary stearic acid compared with trans, other saturated, and unsaturated fatty acids: a systematic review", American Journal of Clinical Nutrition 2010 Jan;91(1):46-63; Mathilde Fleith, Nestlé Research Centre, Nestec Ltd, Lausanne, Switzerland, "Health Effects of Individual Saturated Fatty Acids: Report of Health 8v Nutrition Division Session at the 106th AOCS Annual Meeting") have considered the impact on health of the single saturated fatty acids, differentiating between palmitic acid (C16) and stearic acid (C18), and have shown that stearic acid does not appear to have particularly negative effects on the health of the consumer, with a behavior in respect of LDL cholesterol which is more similar to that of oleic acid and linoleic acid with, in some cases, a positive effect on the ratio between total cholesterol and HDL cholesterol.

Palm oil is rich in palmitic acid C16, with a percentage content higher than 50% and is included in the formulation of certain products, including margarines.

The patent application FR 3015184 relates to a lipid composition for pastry products, in particular soft cakes, in which such a composition is an oil in water emulsion where the palm oil is replaced with a vegetable oil having a high unsaturated fat content, including, for example, rapeseed oil, sunflower oil, peanut oil, olive oil and sesame oil.

The patent application FR 2986693 describes an oily preparation in liquid form based on a vegetable oil replacing the palm oil, chosen from among sunflower oil with a high oleic acid content, rapeseed oil with a high oleic acid content, olive oil, corn oil, soybean oil or mixtures thereof.

The patent GB 9517480 describes a conventional and/or spreadable margarine without palm oil, in which the base oil of the fatty phase comprises a mixture of co-interesterified vegetable oils composed of "domestic" vegetable oils, namely oils not derived from tropical plants (for example soybean oil, cottonseed oil, sesame oil, corn oil, rapeseed oil) and vegetable oils which are totally hydrogenated, refined and bleached (for example peanut oil, sunflower oil, sesame oil, corn oil and cottonseed oil).

The patent application EP 2879505 concerns a spreadable fat blend composition which does not comprise palm oil and in which the fatty phase is composed of a vegetable oil selected from, for example, rapeseed oil, sunflower soil with a high stearic acid content and high oleic acid content, soybean oil, corn oil, and a solid fat consisting of a totally hydrogenated, fractionated or interesterified oil.

In margarines for puff pastry merely the reduction of the saturated fatty acids content, via the elimination of the palm oil, results in a lesser plasticity and significantly reduces the workability thereof.

WO 02/41699 describes a margarine comprising 70-20% of an aqueous phase dispersed in 30-80% of a fat phase, which fat phase is a mixture of 50-99% of a vegetable oil A and 1-50% of a structuring triglyceride B, which fat consists of 5-100% of a hardstock fat C and up to 95% of a fat D. The fatty phase may consist entirely of the aforementioned first fat consisting of Allanblackia fat and/or Pentadesma fat, characterized by a high concentration of triglycerides with stearic acid and oleic acid (65% in the Allanblackia fat and 48% in the Pentadesma fat. The aqueous phase comprises water, emulsifiers, gelling agents and/or thickening agents, salts, coloring agents, flavoring agents, preservatives, milk proteins and optionally a dispersed fatty phase and does not contain dietary fibers.

GB 1091593 describes a margarine which comprises a continuous phase of a semi-solid fat and a dispersed phase of a liquid fat in an aqueous medium. This emulsion is stabilized by the presence of a protective colloid, comprising casein and optionally gelatin, and a calcium ion sequestering agent, namely a polyphosphate or a citrate of an alkaline metal. The food composition according to GB 1091593 does not contain dietary fibers.

The margarines described in WO 02/41699 and GB 1091593 are not particularly suitable for the preparation of bakery products of the puff pastry type since they do not contain any ingredients able to partially absorb the oil of the fatty phase and the water of the aqueous phase and thus prevent part of the margarine being absorbed by the puff pastry, this leading to an insufficient quality of the end product.

EP 2153725 describes a margarine with a reduced fat content and suitable for the production of doughs obtained by means of lamination.

This margarine comprises 45%-65% of a fatty phase comprising at least one emulsifier and 35-55% of an aqueous phase comprising at least one thickening agent.

The emulsifier, present in a quantity of between 0.1 and 5% by weight of the total composition, may be a monoglyceride or lecithin; the thickening agent, present in a quantity of between 0.2 and 10% by weight of the total composition, may be an alginate, a rubber, starch, gelatin, maltodextrin, pectin or inulin. The combination of the emulsifier and the thickening agent in the aforementioned proportions provides the margarine with an acceptable stability suitable for working puff pastry dough. The composition according to EP 2153725 does not contain insoluble dietary fibers.

Although this margarine is described as being suitable for working doughs for bakery products of the puff pastry type, it does not however comprise ingredients that are able to prevent the oil of the fatty phase and the water of the aqueous phase, which are released during working of the puff pastry dough, from being absorbed in the puff pastry. This entails a risk to ruin the organoleptic/ structural properties of the puff pastry.

EP 1 611 794 describes a margarine-like composition for laminated doughs of reduced fat content comprising, in percentage weight of the total weight, from 35.0 to 80.0 % of a fat phase containing a mixture of vegetable fats, and from 20.0 to 65.0 % of an aqueous phase comprising inulin and pectin, and at least one emulsifier; this margarine-like composition may also comprise milk proteins.

US 2006/251789 discloses an edible dairy containing composition comprising a cheese, imitation cheese, yogurt, ice cream, ice milk, milk, soft serve, cream cheese, sour cream, frozen yogurt, or sherbet composition comprising 0.05-30% by weight of highly refined cellulose fiber defined by a fiber material that has a total dietary fiber (TDF) content greater than 30% as measured by AOAC 991.43 and a water holding capacity greater than five parts water per part fiber as measured by AACC 56-30 followed literally or with modifications as listed in the specifications and is less than 90% soluble fiber.

The problem underlying the invention described below is therefore that of providing a margarine with a low saturated fatty acids content and without palm oil, having structural characteristics suitable for its use in the preparation of bakery products of the puff pastry type, in particular Danish pastry doughs.

### Summary of the invention

The present invention solves the aforementioned technical problem by providing a "roll-in" margarine composition with a reduced saturated fatty acids content comprising, in percentage by weight of the total weight of the composition, from 60% to 80% of a fatty phase and from 40% to 20% of an aqueous phase comprising water, proteins and dietary fibers, wherein said fatty phase consists of 30% to 45% of at least one vegetable fat rich in stearic acid and 70% to 55% of at least one vegetable oil, said dietary fibers are soluble fibers selected from the group consisting of beta-glucans, concentrated algae, pea fiber, potato fiber, psyllium fiber, guar fiber, and/or insoluble fibers selected from the group consisting of celluloses, wheat fiber, pea integument fiber, carrot fiber and bamboo fiber, and said proteins are selected from the group consisting of gluten, soy proteins and pea proteins.

The term "vegetable fat" is understood as meaning a lipid based on triglycerides of vegetable origin, which is solid at room temperature; the term "vegetable oil" is instead understood as meaning a lipid based on triglycerides of vegetable origin, which is liquid at room temperature.

The percentages indicated in the present application, unless otherwise indicated, are understood as meaning percentages by weight (w/w).

Preferably, the saturated fatty acids content of the margarine composition according to the invention is comprised between 20% and 40%, even more preferably between 25% and 30% by weight of the weight of the total margarine composition.

Preferably, the vegetable fat of the fatty phase has a saturated fatty acids content of at least 50% (relative to total weight of the fatty acids) and at least 80%, preferably from 85 to 95%, of these fatty acids consists of stearic acid.

Preferably, the aforementioned vegetable fat is selected from the group comprising shea stearin, high stearic acid sunflower stearin and a fraction of fat from microalgae.

Preferably, at least 55% of the triglycerides contained in the aforementioned vegetable fat consist of SOS (stearic-oleic-stearic) triglycerides.

Preferably, the vegetable oil of the fatty phase is selected from the group consisting of corn oil, soybean oil, rapeseed oil, sunflower oil and peanut oil, and conveniently is high oleic sunflower oil.

The fatty phase of the margarine composition according to the present invention is characterized by a ratio between saturated, monounsaturated and polyunsaturated fatty acids of between 0.42:1:0.12 and 0.60:1:012.

Preferably, the fatty phase further comprises at least one emulsifying agent in an amount less than or equal to 3% by weight of the total weight of the composition.

Preferably, said at least one emulsifying agent is selected from monoglycerides of dietary fatty acids, with the function of improving and increasing the speed of crystallization, and fluid lecithin derived from sunflower or soya.

In the present invention, the emulsifying agents are chosen depending on their function: fluid lecithin because of its emulsifying action on the aqueous phase and monoglyceride because of its capacity to stabilize the fatty phase and increase the speed of crystallization of the composition according to the invention.

Preferably, the water of the aqueous phase is contained in an amount equal to 22-28% by weight of the weight of the composition.

Preferably, the proteins consist of gluten.

Preferably, the soluble fibers of the aqueous phase are selected from the group consisting of pea, potato and psyllium fibers.

The fiber mixtures according to this invention, which have the best performance characteristics, are characterized by typical analytical values for water and oil absorption and viscosity and are obtained by mixing different fibers.

Particularly preferred is the use of a fiber mixture consisting of psyllium, carrot and wheat fibers or, alternatively, a mixture of psyllium, potato and pea fibers.

In particular, the water absorption capacity of the aforementioned fiber mixtures is comprised between 8 ml/g and 11 ml/g (ml of water per g of fiber) and the oil absorption capacity is comprised between 1.3 g/g and 3.5 g/g (g of oil per g of fibers).

Moreover, the aqueous dispersions of the aforementioned fiber mixtures (obtained by dispersing the fiber mixtures in water at 65°C) are characterized by a shear stress value which varies depending on the concentration of fibers contained in the dispersion.

In particular, the viscosity of the dispersions containing 2% w/v of fibers is comprised between 0.85 Pa and 1.6 Pa; the viscosity of the dispersions containing 5% w/v of fibers is comprised between 7.6 Pa and 16 Pa and the viscosity of the dispersions containing 7% w/v of fibers is comprised between 39 Pa and 45 Pa.

The margarine composition according to the present invention envisages advantageously the use of soluble and insoluble fibers in the aqueous phase, the function of which consists in the absorption of water and oil, therefore preventing part of the composition from being absorbed by the puff pastry.

Moreover, the presence of soluble fibers derived from the psyllium and algae concentrate allows the formation of a gel type structure which increases the compactness of the margarine composition.

Another advantage consists in the percentage moisture content of the product according to the invention, which ensures that a consistency suitable for rolling and leavening of the bakery product dough is maintained.

Owing to the aforementioned plasticity and compactness characteristics, the margarine composition according to the present invention is suitable for use in the production of food products, in particular puff pastry and sweet leavened puff pastry (Danish pastry).

The present margarine composition is prepared by means of a process which comprises the steps of:
a) preparing a homogeneous aqueous dispersion of the dietary fibers and the proteins in water at a temperature of between 55°C and 65°C;
b) preparing a homogeneous dispersion of the at least one vegetable oil and the at least one vegetable fat, by melting the latter at a temperature of between 55°C and 65°C and mixing it with the at least one vegetable oil;
c) emulsifying at a temperature of 55-80°C, advantageously at 60°C, the two dispersions obtained in steps a) and b) to obtain a homogeneous emulsion;
d) plasticizing the emulsion obtained in step c) and allowing it to mature.

Preferably this plasticized emulsion is allowed to mature for at least 7 days at a temperature of between 15 and 20 °C.

Preferably, in step b), the homogeneous dispersion of the at least one vegetable oil and the at least one vegetable fat comprises at least one emulsifier selected from monoglycerides and fluid lecithin derived from sunflower or soya.

Preferably, prior to said step c) of emulsifying the dispersions obtained in said steps a) and b), said dispersion of said at least one vegetable oil and said at least one vegetable fat obtained in said step b) is kept at 45-55°C, while stirring.

Preferably, in the step d) of plasticizing the emulsion obtained in the step c), said emulsion is cooled to a temperature of between 8°C and 13°C by sequential conveying into a first cooling cylinder, an intermediate crystallizer (pin rotor) and a second cooling cylinder.

Preferably, the temperature of the emulsion exiting the first cooling cylinder is between 10°C and 18°C.

Preferably, the temperature of the emulsion exiting the intermediate crystallizer is between 20°C and 30°C.

Preferably, the temperature of the emulsion exiting the second cooling cylinder is between 8°C and 13°C.

As a result of the procedure thus described, composed of different sequential steps, it is possible to obtain a final margarine with a homogeneous composition, having a structure suitable for use for puff pastry, distinguished by the combination of crystallization of the fats and compactness of the aqueous phase which helps maintain the correct consistency of the puff pastry (dough + margarine after rolling) during the leavening and baking step, despite the high percentage of unsaturated fatty acids, preventing the release of oil therefrom.

### Brief description of the figures

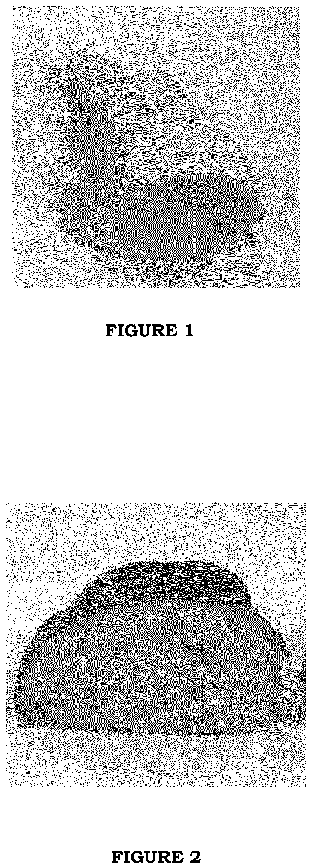

Figure 1 shows a croissant before leavening, made from sweet puff pastry (Danish pastry) with the margarine composition according to the present invention.
Figure 2 shows a croissant after leavening, made from sweet puff pastry (Danish pastry) with the margarine composition according to the present invention.
Figure 3 shows a comparative graph of the viscosity of the two fiber mixtures according to the invention based on the Windhab mathematical model.
Figure 4 shows a comparative graph of the rheology of a standard roll-in margarine compared with that of a margarine according to the present invention.
Figure 5 shows a comparative graph of the consistency of two standard roll-in margarines compared with that of a margarine according to Example 1 of the invention and a margarine according to Example 2 of the invention.

### Detailed description of the invention

The present invention will be further described with reference to some examples of embodiment shown provided hereinbelow way of a nonlimiting example.

### EXAMPLE 1 - First margarine composition

| | |
|---|---|
| Water | 25 % |
| Fibers | 1.7 % |
| Mix 1 = pea: 40%, potato: 30%, psyllium: 30%) | |
| Proteins (gluten) | 2% |
| High oleic sunflower oil | 41.3 % |
| Shea stearin | 30% |

The fatty phase percentage is 71.3% and the aqueous phase percentage is 28.7%, 25% of which is water.

The margarine composition was prepared in the manner described below.

A homogeneous aqueous dispersion of soluble fibers, insoluble fibers and proteins, forming the aqueous phase of the margarine composition according to the invention, was prepared using the process described hereinbelow.

The process consists of a step of mixing the dry products formulated in powder form, namely fibers and proteins; a subsequent step of cold dispersion of this mixture in water for 5 minutes and a final step of heating of the dispersion thus obtained to a temperature of 60°C with continuous stirring.

At the same time. a homogeneous fatty dispersion of the vegetable oil and vegetable fat was prepared.

The process for obtaining the fatty dispersion according to the invention consists in a heating step and a step of mixing the fat and the oil at a temperature of 60°C for 30 minutes, while continuously stirring.

The aqueous phase is added to the fatty phase at the temperature of 60°C and the whole composition is subjected to the action of the emulsifying head of the homogenizer/emulsifier for about 20 minutes until a homogeneous emulsion is obtained. This emulsion is then transferred into a scraped-surface plasticizer in order to obtain plasticization thereof.

In the plasticization plant, the margarine composition according to Example 1 is subjected to a cooling step which occurs by means of the sequential conveying of the composition into a first cooling cylinder, an intermediate crystallizer and a second cooling cylinder.

The temperatures of the composition recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 60.2 |
| Outlet of the first cooling cylinder | 11 |
| Outlet of the intermediate crystallizer | 24 |
| Outlet of the second cooling cylinder | 11 |

The composition thus cooled is conveyed away for packaging and the step where it is allowed to mature for 7 days at 15-20°C.

### EXAMPLE 2 - Second margarine composition

| | |
|---|---|
| Water | 25 % |
| Fibers | 1.695 % |
| Mix 1 = pea: 40%, potato: 30% and psyllium: 30%) | |
| Proteins (gluten) | 2.0 % |
| Citric acid | 0.005 % |
| High oleic sunflower vegetable oil | 41.3 % |
| Shea stearin | 27.6 % |
| Fluid lecithin | 0.4 % |
| Monoglycerides | 2 % |

In this composition, the fluid lecithin and the monoglycerides are added to the fatty phase as emulsifying agents and the citric acid is added to the aqueous phase as acidifier.

The presence of emulsifiers in the margarine composition allows a reduction of the crystallization time and increases the hardness of the end product.

The fatty phase percentage is 71.3% and the aqueous phase percentage is 28.7%, 25% of which is water.

The composition was prepared using the process described in Example 1.

In the plasticizer, the temperatures of the composition according to Example 2 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 53.3 |
| Outlet of the first cooling cylinder | 12.5 |
| Outlet of the intermediate crystallizer | 27.1 |
| Outlet of the second cooling cylinder | 8.3 |

### EXAMPLE 3 - Third margarine composition

| | |
|---|---|
| Water | 25 % |
| Fibers | 1.0 % |
| Mix 2 = wheat: 50%, carrot: 30%, psyllium: 20%) | |
| Proteins (wheat gluten) | 2.0 % |
| High oleic sunflower oil | 42 % |
| Shea stearin | 30.0 % |

In this composition, fluid lecithin and monoglycerides were not added to the fatty phase.

The fatty phase percentage is 72% and the aqueous phase percentage is 28%, 25% of which is water.

The composition was prepared using the process described in Example 1.

In the plasticizer, the temperatures of the composition according to Example 3 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 51.1 |
| Outlet of the first cooling cylinder | 14.2 |
| Outlet of the intermediate crystallizer | 25.3 |
| Outlet of the second cooling cylinder | 12 |

### EXAMPLE 4 - Fourth margarine composition

| | |
|---|---|
| Water | 25% |
| Fibers | 1.0 % |
| Mix 2 = wheat: 50%, carrot: 30%, psyllium: 20%) | |
| Proteins (gluten) | 2.0 % |
| Citric acid | 0.005 % |
| High oleic sunflower oil | 41.3 % |
| Shea stearin | 27,6 % |
| Fluid lecithin | 0.4 % |
| Monoglycerides | 2 % |

In this composition, the fluid lecithin and the monoglycerides are added to the fatty phase as emulsifying agents and the citric acid is added to the aqueous phase as acidifier.

The presence of emulsifiers in the margarine composition allows a reduction of the crystallization time and increases the hardness of the end product.

The fatty phase percentage is 71.3% and the aqueous phase percentage is 28.7%, 25% of which is water.

The composition was prepared using the process described in Example 1.

In the plasticizer, the temperatures of the composition according to Example 4 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 56 |
| Outlet of the first cooling cylinder | 14.9 |
| Outlet of the intermediate crystallizer | 25.6 |
| Outlet of the second cooling cylinder | 9.5 |

### EXAMPLE 5 - Fifth margarine composition

| | |
|---|---|
| Water | 25 % |
| Fibers | 1.695 % |
| Mix 2 = wheat: 50%, carrot: 30%, psyllium: 20%) | |
| Proteins (gluten) | 2.0 % |
| Citric acid | 0.005 % |
| Sunflower oil | 38 % |
| High stearic sunflower stearin | 31.9 % |
| Fluid lecithin | 0.4 % |
| Monoglycerides | 1 % |

The fatty phase percentage is 71.3% and the aqueous phase percentage is 28,7%, 25% of which is water. The composition was prepared using the process described in Example 1.

In the plasticizer, the temperatures of the composition according to Example 5 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 55 |
| Outlet of the first cooling cylinder | 15.1 |
| Outlet of the intermediate crystallizer | 26 |
| Outlet of the second cooling cylinder | 11 |

### EXAMPLE 6 - Sixth margarine composition

| | |
|---|---|
| Water | 25 % |
| Fibers | 1.695 % |
| Mix 2 = wheat: 50%, carrot: 30%, psyllium: 20%) | |
| Pea proteins | 2.0 % |
| Citric acid | 0.005 % |
| Sunflower oil | 38 % |
| Vegetable fat (fatty fraction from microalgae) | 31.9 % |
| Fluid lecithin | 0.4 % |
| Monoglycerides | 1 % |

The fatty phase percentage is 71.3% and the aqueous phase percentage is 28.7%, 25% of which is water. The composition was prepared using the process described in Example 1.

In the plasticizer, the temperatures of the composition according to Example 6 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 56 |
| Outlet of the first cooling cylinder | 13.6 |
| Outlet of the intermediate crystallizer | 22.5 |
| Outlet of the second cooling cylinder | 10.7 |

### EXAMPLE 7 - Seventh margarine composition

| | |
|---|---|
| Water | 25 % |
| Fibers | 1.695 % |
| Mix 2 = wheat: 50%, carrot: 30%, psyllium: 20%) | |
| Proteins (gluten) | 2.0 % |
| Citric acid | 0.005 % |
| High oleic sunflower oil | 44.9 % |
| Shea stearin | 25 % |
| Fluid lecithin | 0.4 % |
| Monoglycerides | 1 % |

The fatty phase percentage is 71.3% and the aqueous phase percentage is 28,7%, 25% of which is water. The composition was prepared using the process described in Example 1.

In the plasticizer, the temperatures of the composition according to Example 7 recorded at the inlet of the scraped-surface plasticizer and at the outlet of the first cooling cylinder, the intermediate crystallizer and the second cooling cylinder are as follows:

| | Temperature (°C) |
|---|---|
| Inlet of the plasticizer | 59 |
| Outlet of the first cooling cylinder | 17.1 |
| Outlet of the intermediate crystallizer | 24 |
| Outlet of the second cooling cylinder | 12 |

### EXAMPLE 8: Rheological analysis of the fiber mixtures (Mix 1 and Mix 2)

A test was carried out to determine the viscosity of aqueous dispersions of the fiber mixtures (Mix 1 and Mix 2) used in the formulation of the margarine compositions according to the present invention.

The first fiber mixture (Mix 1) contains insoluble pea fiber, soluble potato fiber and soluble psyllium fiber.

The second fiber mixture (Mix 2) contains soluble and insoluble carrot fiber, insoluble wheat fiber and soluble psyllium fiber.

The test was carried out by means of rotational analyses in order to compare the viscosity of aqueous dispersions of the fiber mixtures (Mix 1 and Mix 2) with an increase in the percentage of fiber contained in them, at the temperature of 65°C.

Using the method described below it is possible to measure the rheological characteristics of a non-Newtonian fluid product (including mixtures, creams, chocolates and doughs) as described in the scientific publication "FLUID IMMOBILIZATION - A STRUCTURE-RELATED KEY MECHANISM FOR THE VISCOUS FLOW BEHAVIOR OF CONCENTRATED SUSPENSION SYSTEMS" Erich J. Windhab, Applied Rheology 10, 2, 134-144 (2000).

### Instruments used for the analysis:

- Anton Paar Physica MCR 101 rheometer
- cylinder-glass pair C-CC-27/T200 with C-PTD200 (for rotational measurements)
- cylinder-glass pair CC-17 with C-PTD200 (for rotational measurements)

### Terms and definitions:

- "Shear stress": usually indicated by the Greek letter tau *τ*)
- "Shear rate": i.e. velocity gradient (usually indicated by D or the Greek letter gamma with a dot above it *γ̇*).

According to the method the sample is subjected to a shear rate by means of a cylinder rotating inside a glass with a slightly larger diameter, in order to examine the rheological properties (in particular in this case the viscosity and shear stress).

In particular, the glass (possibly the CC27/T200 if the amount of sample available is greater than about 40 ml) is filled as far as the mark on the inside of the said glass.

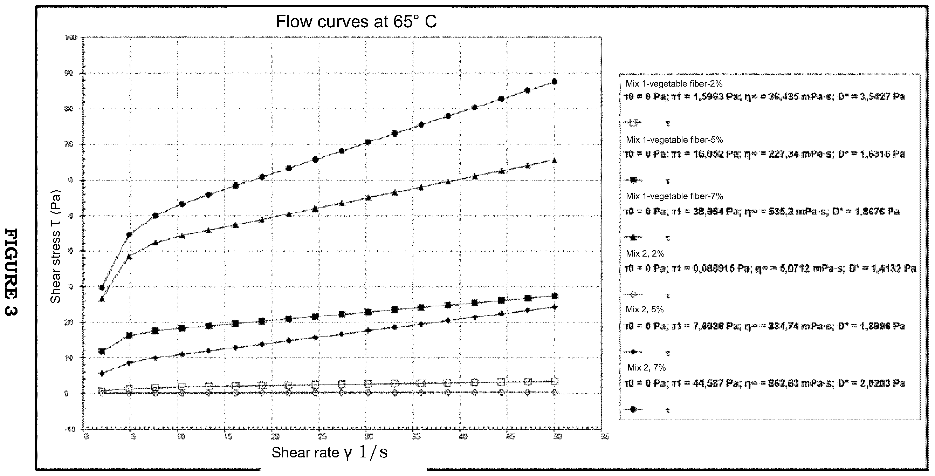

The results obtained were expressed using the Windhab mathematical model and are shown in Figure 3.

According to the graph, the aqueous dispersions of the fiber mixtures (Mix 1 and Mix 2), which are characterized by a different fiber composition, have a similar viscosity which increases with an increase in the concentration of the fibers contained in the aqueous dispersions.

In particular, a similar trend may be observed in the samples with a fiber concentration of 2% and 5%, but it can be noted that, at the fiber concentration of 7%, the viscosity of the aqueous dispersion of the second mixture (Mix 2) represents the limit for obtaining a high-quality final margarine composition.

From the graph it has been possible to obtain values of the viscosity at 65°C of the aqueous dispersions tested with variation in the percentage content of fiber mixture present in each aqueous dispersion, as shown in the table below.

| **Fiber mixture content (g of fiber / 100 ml water)** | **Viscosity of aqueous dispersion Mix 1 (Pa)** | **Viscosity of aqueous dispersion Mix 2 (Pa)** |
|---|---|---|
| 2 | 1.596 | 0.0089 |
| 5 | 16.050 | 7.6026 |
| 7 | 38.954 | 44.587 |

### EXAMPLE 9 - Analysis of the characteristic water absorption of the fiber mixtures (Mix 1 and Mix 2) of the invention

An analysis was carried out to determine the maximum quantity of water absorbed by the fiber mixtures according to the invention.

The water absorption, or "water hydration capacity" (WHC), is defined as the maximum quantity of water retained by 1 g of a given material during centrifuging.

The method described is applicable both to vegetable or animal protein-based matrixes, for example cereal flakes and flours, and to pre-gelatinized starches.

### Equipment:

- Scales, with accuracy to within 0.01 g
- Centrifuge
- 50 ml transparent test tubes for centrifuging
- Pasteur pipettes and probes

The method for determining the water absorption involves weighing, in a pre-weighed test tube, 5.0 g of sample and adding distilled water in small amounts and then stirring with the probe after each addition until the material is uniformly wetted, followed by centrifuging at 2000 rpm for 10 minutes.

Then the quantity of supernatant which may be present is removed using a Pasteur pipette; if the supernatant does not appear, the above operations are repeated while adding more water.

The test tube with the remaining sediment is then weighed and the estimated absorption (ABS) is calculated using the formula indicated below.

In order to calculate the quantity of water and product to be added, the sample quantity, which can be obtained from the following formula, is weighed in four test tubes:
H=15/(ABS+1) where:
   - H: sample quantity to be added to each test tube
   - ABS: estimated absorption
Adding the following amounts of water into each test tube:
   1) 13.5-H
   2) 14.5-H
   3) 15.5-H
   4) 16.5-H

Then, thorough mixing using the probe is performed for 2 minutes, followed by centrifuging at 2000 rpm for 10 minutes, and then the test tubes are compared after centrifuging and the next two test tubes with and without supernatant are examined.

The following mathematical formula was used to express the results of the estimated absorption:
ABS = (A-P-5) / 5 where,
ABS = estimated absorption
A = weight of the test tube with sediment after removal of the supernatant;
P = weight of the test tube

The water absorption (expressed in ml/g) may be obtained from the average of the quantities of water added to the aforementioned test tubes and dividing by H.

An analysis was also conducted to determine the maximum quantity of oil absorbed by the fiber mixtures according to the invention.

The oil absorption, or "oil hydration capacity" (OHC), is defined as the maximum quantity of oil retained by 1 g of a given material during centrifuging.

The method for determining this parameter is the same as that described above for determining the water absorption values.

The table below shows the water absorption (WHC) and oil absorption (OHC) values of the fiber mixtures according to the invention (Mix 1 and Mix 2).

| | **Mix 1** | **Mix 2** |
|---|---|---|
| WHC (ml/g) | 8.54 | 10 |
| OHC (ml/g) | 1.48 | 3 |

Both the fiber mixtures are suitable for use in the formulation of the margarine compositions according to any one of the examples described above.

The values shown in the table represent the optimum amounts of each of the fiber mixtures for obtaining a margarine composition according to the invention.

### EXAMPLE 10 - Characterization of the final margarine composition according to Example 1: rheological analysis

A comparative analysis was carried out in order to compare the rheological characteristics of a standard roll-in margarine with those of a margarine obtained according to Example 1 of the present invention.

### The analysis parameters:

- Analysis tool: parallel-plate rheometer, diameter 25 mm, knurled surface;
- Amplitude sweep: 0.01% to 100%; frequency: 1 Hz
- Gap: 2 mm
- Axial load: 4N

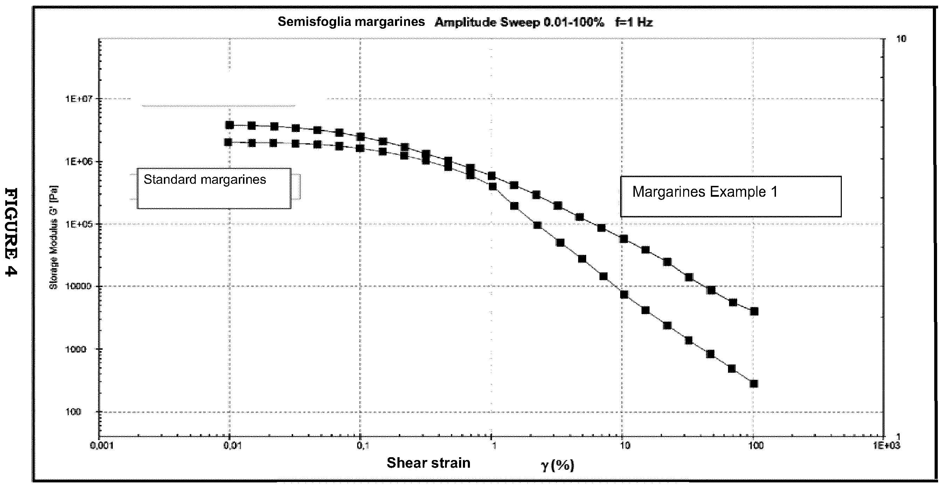

The rheological analysis is shown in Figure 4 where it can be seen that the rheology of the margarine composition according to the present invention comprising a saturated fat content of between 25% and 35% is similar to the rheology of a customarily used margarine which, instead, has a saturated fat content of about 50%.

### EXAMPLE 11 - Characterization of the final margarine composition according to Example 1: determination of the consistency of semi-solid products using a multi-extrusion cell

A comparative analysis was carried out in order to compare the consistency of a standard roll-in margarine and a margarine obtained according to Example 1 of the invention, with examination of the structural deterioration of said margarines following application of a cyclical mechanical stress

In particular, based on this analysis, it is possible to reproduce a simulation of chewing in the mouth or certain processing stages in an industrial plant which may result in softening of a bakery ingredient such as margarine for puff pastry.

This analysis was carried out using a dynamometer in an extrusion cell, which allows the structural composition of the sample margarines to be examined.

The determination of the consistency is performed using a dynamometer which performs a cycle of 50 extrusions with 25 outward strokes 25 and 25 return strokes through an extruder inside a hermetically sealed cylinder.

The analytical method applied to determine the consistency of the margarine composition according to the invention is described in the publication: Renzetti S., de Harder R., Jurgens A., "Puff pastry with low saturated fat contents: The role of fat and dough physical interactions in the development of a layered structure", Journal of Food Engineering (2016) 170:24-32.

The results of the analysis are expressed in a graph showing the values of work (Joule) according to the extrusion cycles.

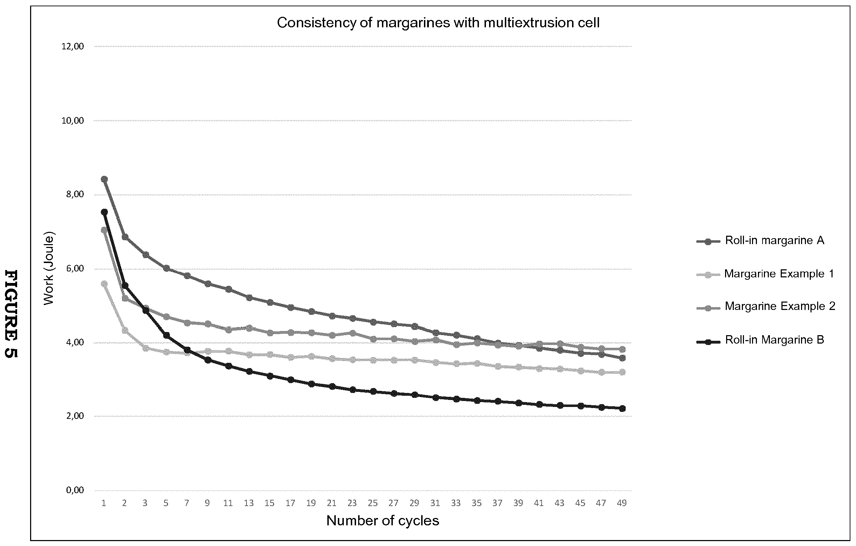

The graph in Figure 5 shows that the consistency values of the margarine compositions obtained according to Example 1 and Example 2 fall within the range of consistency values of standard roll-in margarines, the limit values of which are determined by the consistency values of two standard, commercially available, roll-in margarines which were tested in the analysis and which are indicated in the graph by the name "roll-in margarine A" (sold by Unigrà) and "roll-in margarine B" (sold by Unigrà), respectively.

This result shows that, although the margarine compositions according to the present invention comprise a reduced fatty acids content of between 20% and 40% w/w, these compositions have consistency characteristics typical of standard roll-in margarines which, instead, have a saturated fatty acids content of about 50% w/w.

## Claims

1. A "roll-in" margarine composition with a reduced saturated fatty acids content comprising, in percentage by weight of the total weight of the composition, from 60% to 80% of a fatty phase and from 40% to 20% of an aqueous phase comprising water, proteins and dietary fibers, wherein said fatty phase consists of 30% to 45% of at least one vegetable fat rich in stearic acid and 70% to 55% of at least one vegetable oil, said dietary fibers are soluble fibers selected from the group consisting of beta-glucans, concentrated algae, pea fiber, potato fiber, psyllium fiber, guar fiber, and/or insoluble fibers selected from the group consisting of celluloses, wheat fiber, pea integument fiber, carrot fiber and bamboo fiber, and said proteins are selected from the group consisting of gluten, soy proteins and pea proteins.

2. The composition according to claim 1, wherein said composition has a content of saturated fatty acids of between 20% and 40%, preferably between 25% and 30% in percentage by weight of the total weight of the composition.

3. The composition according to claims 1-2, wherein said vegetable fat of the fatty phase has a content of saturated fatty acids of at least 50% (relative to the total weight of fatty acids) and wherein at least 80%, preferably from 85% to 95%, of said saturated fatty acids consists of stearic acid.

4. The composition according to claim 3, wherein said vegetable fat is selected from the group comprising shea stearin, high stearic acid sunflower stearin and a fraction of fat from microalgae.

5. The composition according to claims 1-4, wherein at least 55% of the triglycerides contained in said vegetable fat consist of SOS (stearic-oleic-stearic) triglycerides.

6. The composition according to claim 1, wherein said vegetable oil of the fatty phase is selected from the group consisting of corn oil, soybean oil, rapeseed oil, sunflower oil and peanut oil, and conveniently is high oleic sunflower oil.

7. The composition according to claim 1, wherein said fatty phase is **characterized in that** the saturated, monounsaturated and polyunsaturated fatty acids are in a ratio of between 0.42:1:0.12 and 0.60:1:0.12.

8. The composition according to claim 1, wherein said fatty phase further comprises at least one emulsifying agent in an amount less than or equal to 3% by weight of the total weight of the composition.

9. The composition according to claim 8, wherein said at least one emulsifying agent is selected from a monoglyceride and fluid lecithin derived from sunflower or soya.

10. The composition according to claim 1, wherein the water of said aqueous phase is contained in an amount equal to 22-28% by weight of the weight of the composition.

11. The composition according to claim 1, wherein said proteins consist of gluten.

12. The composition according to claim 1, wherein said soluble fibers of the aqueous phase are selected from the group consisting of pea fiber, potato fiber and psyllium fiber.

13. A process for the production of a "roll-in" margarine composition with a reduced saturated fatty acids content according to any one of the preceding claims, comprising the steps of:
a) preparing a homogeneous aqueous dispersion of said dietary fibers and said proteins in water at a temperature of between 55°C and 65°C;
b) preparing a homogeneous dispersion of said at least one vegetable oil and said at least one vegetable fat, by melting the latter at a temperature of between 55°C and 65°C and mixing it with said at least one vegetable oil;
c) emulsifying at a temperature of 55-80°C, advantageously at 60°C, said two dispersions obtained in steps a) and b) to obtain a homogeneous emulsion;
d) plasticizing said emulsion obtained in step c) and allowing it to mature.

14. The process according to claim 13, wherein said plasticized emulsion is allowed to mature for at least 7 days at 15-20°C.

15. The process according to claim 13 or 14, wherein in said step b), said homogeneous dispersion of said at least one vegetable oil and said at least one vegetable fat comprises at least one emulsifier selected from monoglycerides and fluid lecithin derived from sunflower or soya.

16. The process according to any one of claims 13-15, wherein prior to said step c) of emulsifying the dispersions obtained in said steps a) and b), said dispersion of said at least one vegetable oil and said at least one vegetable fat obtained in said step b) is kept at 45-55°C, while stirring.

17. The process according to any one of claims 13-16, wherein in said step d) of plasticizing said emulsion obtained in said step c), said emulsion is cooled to a temperature of between 8°C and 13°C by sequential conveying into a first cooling cylinder, an intermediate crystallizer and a second cooling cylinder.

18. The process according to claim 17, wherein the temperature of said emulsion exiting said first cooling cylinder is between 10°C and 18°C.

19. The process according to claim 17, wherein the temperature of said emulsion exiting said intermediate crystallizer is between 20°C and 30°C.

20. The process according to claim 17, wherein the temperature of said emulsion exiting said second cooling cylinder is between 8°C and 13°C.

## Patentansprüche

1. "Roll-in"-Margarinezusammensetzung mit einem reduzierten Gehalt an gesättigten Fettsäuren, die in Gewichtsprozent des Gesamtgewichts der Zusammensetzung 60% bis 80% einer Fettphase und 40% bis 20% einer wässrigen Phase, umfassend Wasser, Proteine und Ballaststoffe, umfasst, wobei die Fettphase aus 30% bis 45% mindestens eines Pflanzenfetts, das reich an Stearinsäure ist, und 70% bis 55% mindestens eines Pflanzenöls besteht, die Ballaststoffe lösliche Fasern, ausgewählt aus der Gruppe, bestehend aus Beta-Glucanen, konzentrierten Algen, Erbsenfasern, Kartoffelfasern, Psylliumfasern, Guarfasern, und/oder unlösliche Fasern, ausgewählt aus der Gruppe, bestehend aus Cellulosen, Weizenfasern, Erbsenhüllenfasern, Karottenfasern und Bambusfasern sind, und die Proteine aus der Gruppe, bestehend aus Gluten, Sojaproteinen, Erbsenproteinen, ausgewählt sind.

2. Zusammensetzung nach Anspruch 1, wobei die Zusammensetzung einen Gehalt an gesättigten Fettsäuren zwischen 20% und 40%, vorzugsweise zwischen 25% und 30% in Gewichtsprozent des Gesamtgewichts der Zusammensetzung aufweist.

3. Zusammensetzung nach den Ansprüchen 1-2, wobei das Pflanzenfett der Fettphase einen Gehalt an gesättigten Fettsäuren von mindestens 50% (bezogen auf das Gesamtgewicht an Fettsäuren) aufweist, und wobei mindestens 80%, vorzugsweise 85% bis 95% der gesättigten Fettsäuren aus Stearinsäure bestehen.

4. Zusammensetzung nach Anspruch 3, wobei das Pflanzenfett aus der Gruppe ausgewählt ist, die Shea-Stearin, Sonnenblumen-Stearin mit hohem Stearinsäuregehalt und eine Fraktion von Fett aus Mikroalgen umfasst.

5. Zusammensetzung nach den Ansprüchen 1-4, wobei mindestens 55% der Triglyceride, die in dem Pflanzenfett enthalten sind, aus SOS (Stearinsäure-Ölsäure-Stearinsäure)-Triglyceriden bestehen.

6. Zusammensetzung nach Anspruch 1, wobei das Pflanzenöl der Fettphase aus der Gruppe ausgewählt ist, die aus Maisöl, Sojabohnenöl, Rapsöl, Sonnenblumenöl und Erdnussöl besteht, und zweckmäßigerweise Sonnenblumenöl mit hohem Ölsäuregehalt ist.

7. Zusammensetzung nach Anspruch 1, wobei die Fettphase **dadurch gekennzeichnet ist, dass** die gesättigten, einfach ungesättigten und mehrfach ungesättigten Fettsäuren in einem Verhältnis zwischen 0,42:1:0,12 und 0,60:1:0,12 vorliegen.

8. Zusammensetzung nach Anspruch 1, wobei die Fettphase ferner mindestens einen Emulgator in einer Menge von weniger als oder gleich 3 Gew.-% des Gesamtgewichts der Zusammensetzung umfasst.

9. Zusammensetzung nach Anspruch 8, wobei der mindestens eine Emulgator ausgewählt ist aus einem Monoglycerid und flüssigem Lecithin, das von Sonnenblume oder Soja stammt.

10. Zusammensetzung nach Anspruch 1, wobei das Wasser der wässrigen Phase in einer Menge gleich 22-28 Gew.-% des Gewichts der Zusammensetzung enthalten ist.

11. Zusammensetzung nach Anspruch 1, wobei die Proteine aus Gluten bestehen.

12. Zusammensetzung nach Anspruch 1, wobei die löslichen Fasern der wässrigen Phase ausgewählt sind aus der Gruppe, die aus Erbsenfasern, Kartoffelfasern und Psylliumfasern besteht.

13. Verfahren zur Herstellung einer "Roll-in"-Margarinezusammensetzung mit einem reduzierten Gehalt an gesättigten Fettsäuren nach einem der vorhergehenden Ansprüche, umfassend die Schritte:
a) Herstellen einer homogenen wässrigen Dispersion der Ballaststoffe und der Proteine in Wasser bei einer Temperatur zwischen 55°C und 65°C;
b) Herstellen einer homogenen Dispersion des mindestens einen Pflanzenöls und des mindestens einen Pflanzenfetts durch Schmelzen des letzteren bei einer Temperatur zwischen 55°C und 65°C und Mischen desselben mit dem mindestens einen Pflanzenöl,
c) Emulgieren der beiden in den Schritten a) und b) erhaltenen Dispersionen bei einer Temperatur von 55-80°C, vorteilhafterweise bei 60°C, um eine homogene Emulsion zu erhalten;
d) Plastifizieren der in Schritt c) erhaltenen Emulsion und Reifenlassen.

14. Verfahren nach Anspruch 13, wobei man die plastifizierte Emulsion mindestens 7 Tage bei 15-20°C reifen lässt.

15. Verfahren nach Anspruch 13 oder 14, wobei in Schritt b) die homogene Dispersion des mindestens einen Pflanzenöls und des mindestens einen Pflanzenfetts mindestens einen Emulgator umfasst, ausgewählt aus Monoglyceriden und flüssigem Lecithin, das von Sonnenblume oder Soja stammt.

16. Verfahren nach einem der Ansprüche 13-15, wobei vor dem Schritt c) des Emulgierens der in den Schritten a) und b) erhaltenen Dispersionen die in Schritt b) erhaltene Dispersion des mindestens einen Pflanzenöls und des mindestens einen Pflanzenfetts unter Rühren auf 45-55°C gehalten wird.

17. Verfahren nach einem der Ansprüche 13-16, wobei in Schritt d) des Plastifizierens der in Schritt c) erhaltenen Emulsion die Emulsion durch sequenzielles Transportieren in einen erster Kühlzylinder, einen Zwischenkristallisator und einen zweiter Kühlzylinder auf eine Temperatur zwischen 8°C und 13°C abgekühlt wird.

18. Verfahren nach Anspruch 17, wobei die Temperatur der den ersten Kühlzylinder verlassenden Emulsion zwischen 10°C und 18°C liegt.

19. Verfahren nach Anspruch 17, wobei die Temperatur der den Zwischenkristallisator verlassenden Emulsion zwischen 20°C und 30°C liegt.

20. Verfahren nach Anspruch 17, wobei die Temperatur der den zweiten Kühlzylinder verlassenden Emulsion zwischen 8°C und 13°C liegt.

## Revendications

1. Une composition de margarine "roll-in" à teneur réduite en acides gras saturés comprenant, en pourcentage en poids du poids total de la composition, de 60 % à 80 % d'une phase grasse et de 40 % à 20 % de une phase aqueuse comprenant de l'eau, des protéines et des fibres alimentaires, ladite phase grasse étant constituée de 30% à 45% d'au moins une matière grasse végétale riche en acide stéarique et de 70% à 55% d'au moins une huile végétale, lesdites fibres alimentaires sont des fibres solubles sélectionnées dans le groupe constitué par les bêta-glucanes, les concentrés d'algues, les fibres de pois, les fibres de pomme de terre, les fibres de psyllium, les fibres de guar et/ou les fibres insolubles sélectionnées dans le groupe constitué par les celluloses, les fibres de blé, les fibres de tégument de pois, les fibres de carotte et les fibres de bambou, et lesdites protéines sont choisies dans le groupe consistant en le gluten, les protéines de soja et les protéines de pois.

2. La composition selon la revendication 1, **caractérisée en ce que** ladite composition a une teneur en acides gras saturés comprise entre 20% et 40%, de préférence entre 25% et 30% en pourcentage en poids du poids total de la composition.

3. La composition selon les revendications 1 à 2, dans laquelle ladite matière grasse végétale de la phase grasse a une teneur en acides gras saturés d'au moins 50 % (par rapport au poids total d'acides gras) et dans laquelle au moins 80 %, de préférence de 85% à 95%, desdits acides gras saturés sont constitués d'acide stéarique.

4. La composition selon la revendication 3, dans laquelle ladite matière grasse végétale est choisie dans le groupe comprenant la stéarine de karité, la stéarine de tournesol riche en acide stéarique et une fraction de matière grasse issue de microalgues.

5. La composition selon les revendications 1 à 4, dans laquelle au moins 55 % des triglycérides contenus dans ladite matière grasse végétale sont constitués de triglycérides SOS (stéarique-oléique-stéarique).

6. La composition selon la revendication 1, dans laquelle ladite huile végétale de la phase grasse est choisie dans le groupe constitué par l'huile de maïs, l'huile de soja, l'huile de colza, l'huile de tournesol et l'huile d'arachide, et commodément est l'huile de tournesol hautement oléique.

7. La composition selon l'une des revendications 1, dans laquelle ladite phase grasse est **caractérisée en ce que** les acides gras saturés, monoinsaturés et polyinsaturés sont dans un rapport compris entre 0,42:1:0,12 et 0,60:1:0,12.

8. La composition selon la revendication 1, **caractérisée en ce que** ladite phase grasse comprend en outre au moins un agent émulsifiant en une quantité inférieure ou égale à 3 % en poids du poids total de la composition.

9. La composition selon la revendication 8, dans laquelle ledit au moins un agent émulsifiant est choisi parmi un monoglycéride et la lécithine fluide issue du tournesol ou du soja.

10. La composition selon la revendication 1, dans laquelle l'eau de ladite phase aqueuse est contenue en une quantité égale à 22 à 28 % en poids du poids de la composition.

11. La composition selon la revendication 1, dans laquelle lesdites protéines sont constituées de gluten.

12. La composition selon la revendication 1, dans laquelle lesdites fibres solubles de la phase aqueuse sont choisies dans le groupe constitué par la fibre de pois, la fibre de pomme de terre et la fibre de psyllium.

13. Un procédé de fabrication d'une composition de margarine "roll-in" ayant une teneur réduite en acides gras saturés selon l'une quelconque des revendications précédentes, comprenant les étapes consistant à :
a) préparer une dispersion aqueuse homogène desdites fibres alimentaires et desdites protéines dans de l'eau à une température comprise entre 55°C et 65°C ;
b) préparer une dispersion homogène de ladite au moins une huile végétale et de ladite au moins une matière grasse végétale, en faisant fondre cette dernière à une température comprise entre 55°C et 65°C et en la mélangeant avec ladite au moins une huile végétale ;
c) émulsionner à une température de 55 à 80°C, avantageusement à 60°C, lesdites deux dispersions obtenues aux étapes a) et b) pour obtenir une émulsion homogène ;
d) rendre plastique ladite émulsion obtenue à l'étape c) et la laisser maturer.

14. Le procédé selon la revendication 13, dans lequel ladite émulsion rendue plastique est laissée maturer pendant au moins 7 jours à 15 à 20°C.

15. Le procédé selon la revendication 13 ou la revendication 14, dans lequel dans ladite étape b), ladite dispersion homogène de ladite au moins une huile végétale et de ladite au moins une matière grasse végétale comprend au moins un émulsifiant choisi parmi les monoglycérides et la lécithine fluide issue du tournesol ou du soja.

16. Le procédé selon l'une quelconque des revendications 13 à 15, dans lequel préalablement à ladite étape c) d'émulsification des dispersions obtenues auxdites étapes a) et b), ladite dispersion de ladite au moins une huile végétale et de ladite au moins une graisse végétale obtenue dans ladite étape b) est maintenue à 45 à 55°C, tout en agitant.

17. Le procédé selon l'une quelconque des revendications 13 à 16, dans lequel dans ladite étape d) de plastification de ladite émulsion obtenue dans ladite étape c), ladite émulsion est refroidie à une température comprise entre 8°C et 13°C par transport séquentiel dans un premier cylindre de refroidissement, un cristallisoir intermédiaire et un deuxième cylindre de refroidissement.

18. Le procédé selon la revendication 17, dans lequel la température de ladite émulsion sortant dudit premier cylindre de refroidissement est comprise entre 10°C et 18°C.

19. Le procédé selon la revendication 17, dans lequel la température de ladite émulsion sortant dudit cristallisoir intermédiaire est comprise entre 20°C et 30°C.

20. Le procédé selon la revendication 17, dans lequel la température de ladite émulsion sortant dudit deuxième cylindre de refroidissement est comprise entre 8°C et 13°C.
